# EUROPÄISCHE PATENTSCHRIFT

(11) **EP 1 869 353 B1**
(45) Veröffentlichungstag und Bekanntmachung des Hinweises auf die Patenterteilung: **10.04.2013**
(21) Anmeldenummer: 06708188.5
(22) Anmeldetag: 10.02.2006
(51) Int. Cl.: F16K 15/02

(54) **SAUGSTRAHLPUMPE MIT EINEM DRUCKREGELVENTIL**
EJECTOR PUMP WITH PRESSURE REGULATING VALVE
POMPE A JET ASPIRANT COMPRENANT SOUPAPE DE REGULATION DE PRESSION

(30) Priorität: 05.04.2005 DE 102005015570
(43) Veröffentlichungstag der Anmeldung: 26.12.2007
(73) Patentinhaber: ROBERT BOSCH GMBH, 70442 Stuttgart (DE)
(72) Erfinder: WIELAND, Thomas, 70193 Stuttgart (DE); ROSE, Jochen, 71701 Schwieberdingen (DE); PANKIEWITZ, Christian, 70378 Stuttgart (DE)
(86) Internationale Anmeldenummer: PCT/EP2006/050845
(87) Internationale Veröffentlichungsnummer: WO 2006/106005

(56) Entgegenhaltungen:
- FR-A- 2 760 507
- US-A- 5 058 623
- US-B1- 6 823 892

## Beschreibung

### Stand der Technik

Die Erfindung geht aus von einem Druckregelventil nach der Gattung des Hauptanspruchs.

Es ist schon ein Druckregelventil aus der US 20030084941 A1 bekannt, mit einem Eingangskanal und einem Ausgangskanal, die beide in eine Ventilkammer münden, in der ein axial bezüglich einer Ventilachse beweglicher Ventilkörper angeordnet ist, der mit einem an einem der Ventilkammer zugewandten Ende des Eingangskanals vorgesehenen Ventilsitz zusammenwirkt, und mit einer bei geöffnetem Druckregelventil zwischen dem Ventilkörper und dem Ventilsitz gebildeten Eingangsöffnung in die Ventilkammer. Nachteilig ist, dass der Ausgangskanal derart in der Ventilkammer angeordnet ist, dass sich eine axiale Abströmung aus der Ventilkammer heraus ergibt. Durch die axiale Abströmung wird nur eine vergleichsweise geringe Impulskraft auf den Ventilkörper ausgeübt, der dadurch nur einen vergleichsweise geringen Öffnungshub bei einem vorgegebenen Volumenstrom ausführt. Das Regelverhalten ist dadurch nicht optimal.

US 5 058 623 A zeigt ein Druckregelventil, das für den Einsatz in einem Bypass eines Wärmetauschers vorgesehen ist. Das Druckregelventil hat einen Eingang und einen quer zum Eingang angeordneten Ausgang. Der Ventilkörper ist in einer Ventilkammer des Ventilgehäuses angeordnet und dort geführt. US 6 823 892 B1 zeigt ein automatisches Ventil zur Stabilisierung einer Thermostatmischvorrichtung. Der Ventilkörper ragt mit einem Führungsabschnitt in einen Eingang hinein.

### Vorteile der Erfindung

Die erfindungsgemäβe Sangstrahlpumpe mit einer Treibleitung und mit einem an der Treibleitung vorgesehenen Druchregelventil mit den Merkmalen des Hauptanspruchs hat demgegenüber den Vorteil, dass auf einfache Art und Weise das Regelverhalten des Druckregelventils verbessert wird, indem der Ausgangskanal am Umfang der Ventilkammer vorgesehen und in axialer Richtung derart angeordnet ist, dass sich bei geöffnetem Druckregelventil eine im wesentlichen radiale Abströmung von der Eingangsöffnung in die Ventilkammer bis in den Ausgangskanal ergibt. Zusätzlich ist erfindungsgemäß vorgesehen, dass der Ventilkörper einen Führungsabschnitt zur axialen Führung des Ventilkörpers aufweist, der in den Eingangskanal hineinragt, da das Druckregelventil auf diese Weise sehr klein ausgeführt werden kann und wenig Bauraum benötigt.

Durch die in den Unteransprüchen aufgeführten Maßnahmen sind vorteilhafte Weiterbildungen und Verbesserungen des im Hauptanspruch angegebenen Druckregelventils möglich.

Eine besonders vorteilhafte radiale Abströmung ergibt sich, wenn der Ausgangskanal in axialer Richtung derart angeordnet ist, dass er bei geöffnetem Druckregelventil mit der Eingangsöffnung überlappt.

Darüber hinaus vorteilhaft ist, wenn der Ventilsitz als Flachsitz beziehungsweise als linienförmiger Dichtsitz ausgebildet ist, da auf diese Weise eine noch bessere radiale Abströmung erreicht wird.

Weiterhin vorteilhaft ist, wenn der Ventilkörper einen als Schulter ausgebildeten Schließabschnitt aufweist, der mit dem Ventilsitz zusammenwirkt, da auf diese Weise ein Flachsitz gebildet wird

Sehr vorteilhaft ist es, wenn der Ventilkörper mittels einer in der Ventilkammer angeordneten Ventilfeder in Richtung des Ventilsitzes gedrückt ist, da die Ventilfeder in der Ventilkammer leicht montierbar ist.

Desweiteren vorteilhaft ist, wenn der Führungsabschnitt des Ventilkörpers durch zumindest zwei Führungsstege gebildet ist, da sich der Ventilkörper mit einem solchen Führungsabschnitt besonders einfach mittels Spritzgießen herstellen lässt.

### Zeichnung

Ausführungsbeispiele der Erfindung sind in der Zeichnung vereinfacht dargestellt und in der nachfolgenden Beschreibung näher erläutert.

Es zeigen Fig.1 ein erfindungsgemäßes Druckregelventil, Fig.2 eine Ventilkennlinie des Druckregelventils, Fig.3 einen alternativen Ventilkörper des Druckregelventils gemäß einem zweiten Ausführungsbeispiel, Fig.4 einen alternativen Ventilkörper gemäß einem dritten Ausführungsbeispiel, Fig.5 einen alternativen Ventilkörper gemäß einem vierten Ausführungsbeispiel und Fig.6 eine Saugstrahlpumpe mit einem erfindungsgemäßen Druckregelventil.

### Beschreibung der Ausführungsbeispiele

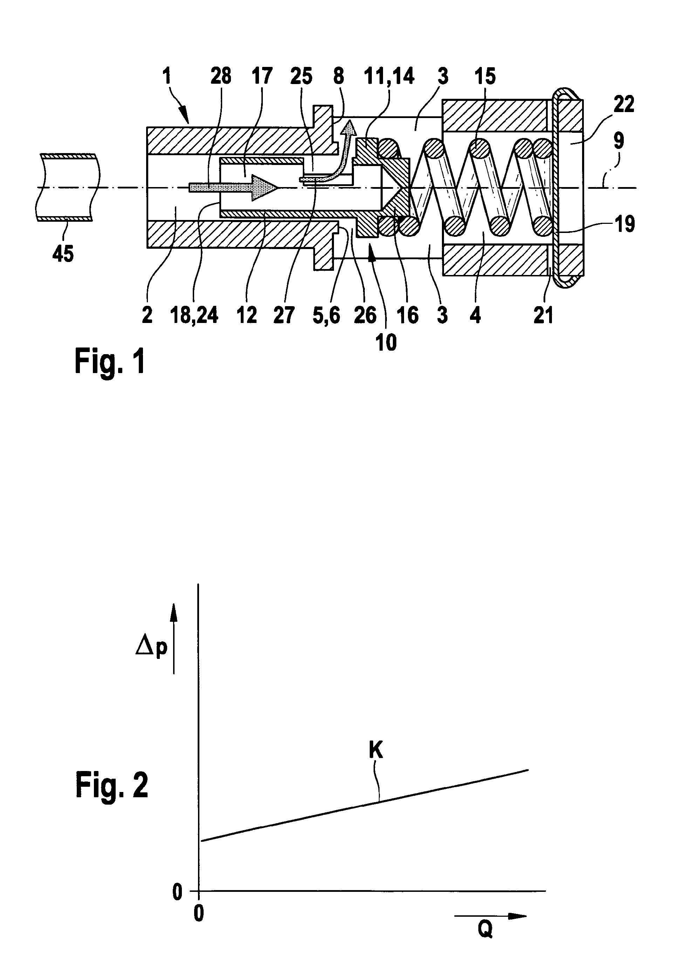

Fig.1 zeigt ein erfindungsgemäßes Druckregelventil. Das Druckregelventil dient dazu, einen vorbestimmten Druck in einer Fluidleitung einzustellen. Das erfindungsgemäße Druckregelventil kann aber auch als Rückschlagventil eingesetzt werden.

Das erfindungsgemäße Druckregelventil hat ein Ventilgehäuse 1 mit einem Eingangskanal 2 und einem Ausgangskanal 3, die beide in eine beispielsweise zylinderförmige Ventilkammer 4 münden. Der Eingangskanal 2 ist stromauf beispielsweise mit einer Druckleitung 45 strömungsverbunden. Der Eingangskanal 2 weist an seinem der Ventilkammer 4 zugewandten Ende einen Ventilsitz 5 auf, der beispielsweise als Flachsitz oder linienförmiger Dichtsitz ausgeführt ist. Der Ventilsitz 5 ist beispielsweise an einer ersten Stirnwand 8 der Ventilkammer 4 angeordnet. Der - Ventilsitz 5 ist beispielsweise ringförmig erhöht gegenüber der ersten Stirnwand 8. Die in axialer Richtung gemessene Erhöhung 6 beträgt beispielsweise 0,6 Millimeter. Die in radialer Richtung bezüglich einer Ventilachse 9 gemessene Wandstärke der ringförmigen Erhöhung sollte möglichst klein sein.

In der Ventilkammer 4 ist ein axial bezüglich der Ventilachse 9 beweglicher Ventilkörper 10 angeordnet. Der Ventilkörper 10 weist beispielsweise einen mit dem Ventilsitz 5 zusammenwirkenden Schliessabschnitt 11 und einen Führungsabschnitt 12 zur axialen Führung des Ventilkörpers 10 auf. Der Führungsabschnitt 12 ist gemäß einem ersten Ausführungsbeispiel zylinderförmig ausgeführt und ragt erfindungsgemäβ zumindest abschnittsweise in den Eingangskanal 2 hinein. Der Schließabschnitt 11 befindet sich in der Ventilkammer 4 und ist beispielsweise zylinderförmig. Gemäß dem ersten Ausführungsbeispiel ist der Schließabschnitt 11 als eine ringförmige Schulter 14 ausgebildet, die an dem Umfang des Führungsabschnitts 12 angeordnet ist. Der Ventilkörper 10 wird mittels einer Ventilfeder 15 in Richtung des Ventilsitzes 5 gedrückt. Die Ventilfeder 15 ist beispielsweise in der Ventilkammer 4 angeordnet, könnte aber auch in dem Eingangskanal 2 vorgesehen sein und auf den Ventilkörper 10 wirken. Das auf den Ventilkörper 10 wirkende Ende der Ventilfeder 15 liegt beispielsweise an der Schulter 14 des Ventilkörpers 10 an und umgibt einen Zentrierabschnitt 16 des Ventilkörpers 10, der die Position der Ventilfeder 15 in radialer Richtung festlegt. Die Ventilfeder 15 liegt an dem dem Ventilkörpers 10 abgewandten Ende an einer Halterung 19 des Ventilgehäuses 1 an. Die Ventilkammer 4 weist beispielsweise an der der ersten Stirnwand 8 der Ventilkammer 4 gegenüberliegende Stirnseite eine Montageöffnung 22 auf, durch die der Ventilkörper 10 und die Ventilfeder 15 in die Ventilkammer 4 einsetzbar sind. Beispielsweise ist die Halterung 19 scheibenförmig und in einem am Umfang der Ventilkammer 4 vorgesehenen Schlitz 21 befestigt.

Der Ventilkörper 10 weist beispielsweise einen Zuführkanal 17 auf, der von einer dem Eingangskanal 2 zugewandten Stirnseite 18 des Ventilkörpers 10 aus eine vorbestimmte Länge in den Ventilkörper 10 hineinreicht. Der Zuführkanal 17 verläuft beispielsweise in axialer Richtung bezüglich der Ventilachse 9 und ist als Sackloch ausgeführt. Der Zuführkanal 17 hat an der Stirnseite 18 einen Kanaleingang 24 und nahe der Schulter 14 des Ventilkörpers 10 zumindest einen am Umfang des Führungsabschnitts 12 vorgesehenen Kanalausgang 25. Bei geschlossenem Druckregelventil liegt der Kanalausgang 25 stromauf des Ventilsitzes, aber in axialer Richtung nahe dem Ventilsitz 5.

Der Schließabschnitt 11 des Ventilkörper 10 überragt den Ventilsitz 5 in radialer Richtung, beispielsweise mit der Schulter 14.

Beim Öffnen des Druckregelventils macht der Ventilkörper 10 einen Hub in vom Ventilsitz 5 abgewandter Richtung. Durch das Abheben des Ventilkörpers 10 vom Ventilsitz 5 wird eine beispielsweise ringförmige Eingangsöffnung 26 in die Ventilkammer 4 zwischen dem Ventilsitz 5 und der Schulter 14 des Ventilkörpers 10 gebildet und die Ventilkammer 4 zum Eingangskanal 2 hin geöffnet.

Erfindungsgemäß ist der Ausgangskanal 3 der Ventilkammer 4 am Umfang der Ventilkammer 4 vorgesehen und in axialer Richtung bezüglich der Ventilachse 9 derart angeordnet ist, dass sich bei geöffnetem Druckregelventil eine im wesentlichen radiale Abströmung 27 von der Eingangsöffnung 26 in die Ventilkammer 4 bis in den Ausgangskanal 3 ergibt.

Beim Öffnen des Druckregelventils bewegt sich der Kanalausgang 25 des Ventilkörpers 10 nach stromab des Ventilsitzes 5, so dass sich zumindest ein Teil des Kanalausgangs 25 des Ventilkörpers 10 mit der Eingangsöffnung 26 in die Ventilkammer 4 und mit zumindest einem Teil des Ausgangskanals 3 in axialer Richtung überlappt. Auf diese Weise wird eine im wesentlichen radiale Abströmung 27 von dem Kanalsausgang 25, über die Eingangsöffnung 26 in die Ventilkammer 4 bis in den Ausgangskanal 3 des Druckregelventils erreicht.

Der Druck des Fluids wirkt über den Eingangskanal 2 auf den Schliesskörper 10. Übersteigt der Druck stromauf des Ventilsitzes 5 einen von der Federkraft der Ventilfeder 15 abhängigen vorbestimmten Wert, so hebt der Ventilkörper 10 vom Ventilsitz 5 ab und öffnet auf diese Weise das Druckregelventil. Nach dem Öffnen des Druckregelventils strömt das Fluid über den axialen Eingangskanal 2, den axialen Zuführkanal 17 des Ventilkörpers 10 und die Eingangsöffnung 26 in radialer Richtung in die Ventilkammer 4 ein und verlässt diese in radialer Richtung über den Ausgangskanal 3. Durch den Flachsitz kann die Strömung besonders gut radial abströmen.

Auf den Ventilkörper 10 wirkt eine durch die Umlenkung des Fluids von axialer in radiale Richtung auftretende Impulskraft, die diesen in vom Ventilsitz 5 abgewandter Richtung entgegen der Federkraft der Ventilfeder 15 bewegt, bis ein Kräftegleichgewicht mit der Federkraft erreicht ist. Die Impulskraft der Strömung steigt mit zunehmendem Durchfluss durch das Druckregelventil an. Die Federkraft der Ventilfeder 15 nimmt mit steigendem Hub des Ventilkörpers 10 linear zu. Bei axialer Zuströmung 28 durch den Eingangskanal 2 in die Ventilkammer 4 und bei erfindungsgemäßer radialer Abströmung 27 in die Ventilkammer 4 ist die von dem Fluid aus dem Eingangskanal 2 auf den Ventilkörper 10 ausgeübte Impulskraft am größten. Beim Stand der Technik mit axialer Zu- und Abströmung ergibt sich dagegen eine kleinere auf den Ventilkörper 10 wirkende Impulskraft.

Die Impuskraft wirkt der Federkraft entgegen. Idealerweise kompensiert die mit steigendem Durchfluss steigende Impulskraft die durch die Hubbewegung des Ventilkörpers 10 zunehmende Federkraft. Damit wird der Regeldruck weitestgehend unabhängig vom Durchfluss gehalten.

Je größer die auf den Ventilkörper 10 wirkende Impulskraft ist, desto größer ist der von dem Ventilkörper 10 ausgeführte Öffnungshub und desto geringer ist der Gesamtdruckverlust des Druckregelventils für einen vorgegebenen Durchfluß.

Der Gesamtdruckverlust des Druckregelventils ergibt sich im wesentlichen aus dem Druckverlust an der Eingangsöffnung 26 in die Ventilkammer 4 zwischen dem Ventilsitz 5 und dem Schließabschnitt 11 des Ventilkörpers 10. Der Druckverlust an der Eingangsöffnung 26 verringert sich bei einer größer werdenden Eingangsöffnung 26, also mit zunehmendem Hub des Schliesskörpers 10.

Beim Stand der Technik mit axialer Abströmung dagegen fällt noch ein zusätzlicher Druckverlust bei der axialen Umströmung des Ventilkörpers 10 an, wenn das Fluid durch einen zwischen einer Umfangswandung der Ventilkammer 4 und dem Ventilkörper 10 gebildeten Drosselspalt hindurchströmen muß, um zum Ausgangskanal zu gelangen. Dieser zusätzliche Druckverlust beim Stand der Technik nimmt mit steigendem Durchfluss zu. Der zusätzliche Druckverlust am Drosselspalt fällt bei dem erfindungsgemäßen Druckregelventil nicht an, da keine axiale Umströmung des Ventilkörpers 10, sondern eine radiale Abströmung erfolgt.

Durch den Entfall des zusätzlichen Druckverlustes am Drosselspalt ergibt sich eine gegenüber dem Stand der Technik mit geringerer Steigung verlaufende Ventilkennlinie K, die einen Verlauf des Gesamtdruckverlustes des Druckregelventils über dem Durchfluß Q beschreibt (Fig.2). Durch die flachere Kennlinie K wird ein besseres Regelverhalten des Druckregelventils erreicht, da sich der Gesamtdruckverlust bei geringen Durchflussänderungen weniger stark ändert. Auf diese Weise wird der Druck in der Druckleitung 45 nahezu konstant gehalten.

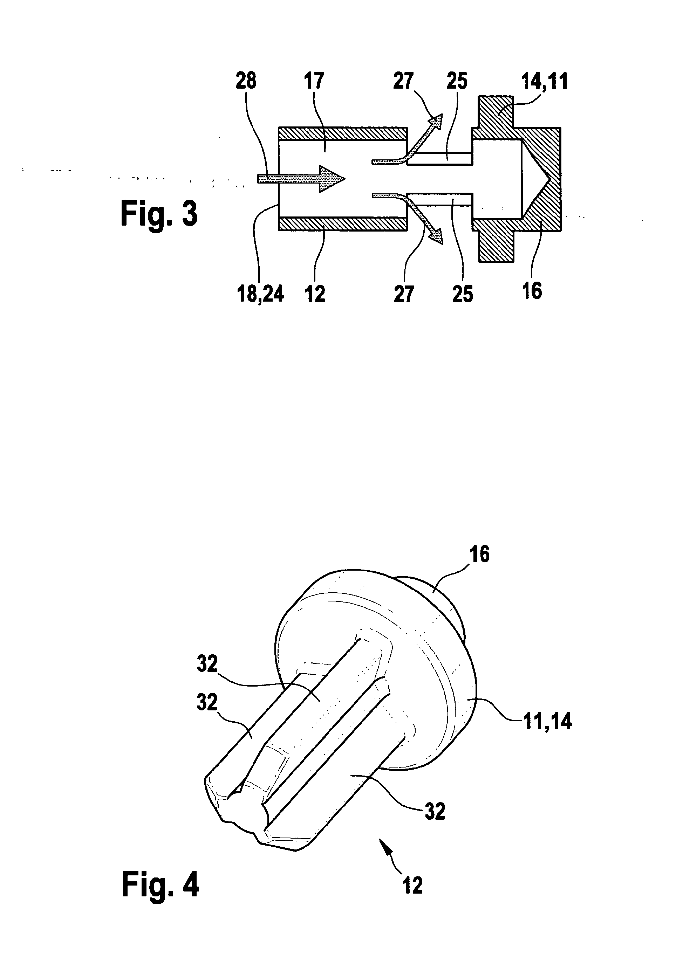

Fig.3 zeigt einen alternativen Ventilkörper 10 gemäß einem zweiten Ausführungsbeispiel, der in einem erfindungsgemäßen Druckregelventil nach Fig. 1 eingesetzt werden kann.

Bei dem Ventilkörper nach Fig.3 sind die gegenüber dem Druckregelventil nach Fig. 1 gleichbleibenden oder gleichwirkenden Teile durch die gleichen Bezugszeichen gekennzeichnet.

Der Ventilkörper 10 nach Fig.3 unterscheidet sich von dem Ventilkörper 10 nach Fig.1 darin, dass nicht nur ein Kanalausgang 25, sondern zwei Kanalausgänge 25 vorgesehen sind.

Auf diese Weise wird die Abströmfläche in die Ventilkammer 4 vergrößert und damit der Druckverlust im Druckregelventil verringert, so dass die Kennlinie K noch flacher verläuft und das Regelverhalten weiter verbessert wird.

Die zwei Kanalausgänge 25 liegen sich beispielsweise diametral gegenüber. Dadurch wird eine symmetrische Abströmung 27 erreicht, so dass die Strömung durch den Zuführkanal 17 kein Kippmoment auf den Ventilkörper 10 ausübt und dieser nicht mit dem Führungsabschnitt 12 in dem Eingangskanal 2 verkanten kann. Das beeinflusst durch eine Verringerung der Hysterese die Regelkennlinie vorteilhaft.

Fig.4 zeigt einen alternativen Ventilkörper gemäß einem dritten Ausführungsbeispiel.

Bei dem Ventilkörper nach Fig.4 sind die gegenüber dem Ventilkörper nach Fig.1 und Fig.3 gleichbleibenden oder gleichwirkenden Teile durch die gleichen Bezugszeichen gekennzeichnet.

Der Führungsabschnitt 12 des Ventilkörpers 10 gemäß diesem Ausführungsbeispiel ist durch zumindest drei Führungsstege 32 gebildet, die jeweils rechteckförmig und zueinander sternförmig, kreuzförmig oder Y-förmig angeordnet sind. Die zumindest drei Führungsstege 32 sind beispielsweise miteinander verbunden.

Der Schließabschnitt 11 des Ventilkörpers ist zylinderförmig ausgebildet, wobei an der einen Stirnseite der Führungsabschnitt 12 und an der anderen Stirnseite der Zentrierabschnitt 16 angeordnet ist.

Der Ventilkörper 10 gemäß diesem Ausführungsbeispiel lässt sich besonders einfach durch Spritzgießen herstellen.

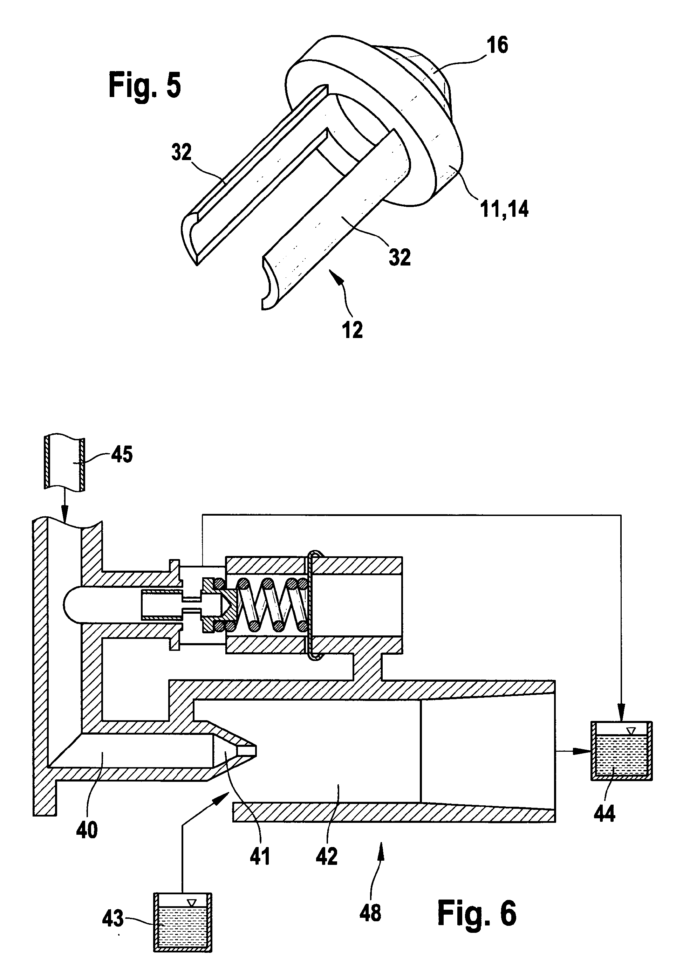

Fig.5 zeigt einen alternativen Ventilkörper gemäß einem vierten Ausführungsbeispiel.

Bei dem Ventilkörper nach Fig.5 sind die gegenüber dem Ventilkörper nach Fig.1, Fig.3 und Fig.4 gleichbleibenden oder gleichwirkenden Teile durch die gleichen Bezugszeichen gekennzeichnet.

Der Führungsabschnitt 12 des Ventilkörpers 10 gemäß diesem Ausführungsbeispiel ist durch zumindest zwei teilringförmige oder schalenförmige Führungsstege 32 gebildet, die zueinander beabstandet sind und sich diametral gegenüberliegen.Der Führungsabschnitt 12 ist einstückig an dem zylinderförmigen Schließabschnitt 11 vorgesehen.

Der Ventilkörper 10 gemäß diesem Ausführungsbeispiel lässt sich besonders einfach durch Spritzgießen herstellen.

Fig. 6 zeigt eine Saugstrahlpumpe mit einem erfindungsgemäßen Druckregelventil.

Die Saugstrahlpumpe weist eine sogenannte Treibleitung 40 auf, die mit einer düsenförmigen Verengung 41 zumindest mittelbar in einen Mischkanal 42 mündet. Der Mischkanal 42 ist stromauf mit einem ersten Behälter 43 und stromab mit einem zweiten Behälter 44 strömungsverbunden. Das Fluid der Treibleitung 40, beispielsweise Kraftstoff, gelangt als sogenannter Treibstrahl in den Mischkanal 42 und fördert auf bekannte Art und Weise Fluid aus dem ersten Behälter 43 in den zweiten Behälter 44. Die Treibleitung 40 ist stromauf mit einer Druckleitung 45 verbunden, die ausreichend Flüssigkeit zum Antreiben der Saugstrahlpumpe zur Verfügung stellt.

An der Treibleitung 40 der Saugstrahlpumpe ist ein erfindungsgemäßes Druckregelventil vorgesehen, das den Druck in der Treibleitung 40 auf einen vorbestimmten Wert regelt. Überschreitet der Druck in der Treibleitung 40 den vorbestimmten Wert, so öffnet dieses und lässt Fluid aus der Treibleitung 40 in den zweiten Behälter 44 abströmen bis der Druck in der Treibleitung 40 den vorbestimmten Wert unterschreitet.

Das erfindungsgemäße Druckregelventil ist beispielsweise einstückig mit dem Gehäuse 48 der Saugstrahlpumpe verbunden.

## Patentansprüche

1. Saugstrahlpumpe mit einer (40) mit einer düsenförmigen Verengung (41) zumindest mittelbar in einen Mischkanal (42) mündet, und mit einem an der Treibleitung (40) vorgesehenen Druckregelventil, das einen Eingangskanal (2) und einem Ausgangskanal (3) aufweist, die beide in eine Ventilkammer (4) münden, in der ein axial bezüglich einer Ventilachse beweglicher Ventilkörper (10) angeordnet ist der mit einem an einem der Ventilkammer (4) zugewandten Ende des Eingangskanald (2) vorgesehenen Ventilsitz (5) zusammenwirkt, mit einer bei geöffnetem Druckregelventil zwischen dem Ventilkörper (10) und dem Ventilsitz (5) gebildeten Eingangsöffnung (26) in die Ventilkammer (4),
wobei der Ausgangskanal (3) am Umfang der Ventilkammer (4) vorgesehen und in axialer Richtung derart angeordnet ist, dass sich bei geöffnetem Druckregelventil eine im wesentlichen radiale Abströmung von der Eingangsöffnung (26) in die Ventilkammer (4) bis in den Ausgangskanal (3) ergibt, wobei der Ventilkörper (10) einen in den Eingangskanal (2) hineinragenden Führungsabschnitt (12) zur axialen Führung des Ventilkörpers (10) aufweist.

2. Saugstrahlpumpe nach Anspruch 1, **dadurch gekennzeichnet, dass** der Ausgangskanal (3) in axialer Richtung derart angeordnet ist, dass er bei geöffnetem Druckregelventil mit der Eingangsöffnung (26) überlappt.

3. Saugstrahlpumpe nach Anspruch 1, **dadurch gekennzeichnet, dass** der Ventilsitz (5) als Flachsitz oder linienförmiger Dichtsitz ausgebildet ist.

4. Saugstrahlpumpe nach Anspruch 1, **dadurch gekennzeichnet, dass** der Ventilsitz (5) ringförmig erhöht ist gegenüber einer ersten Stirnwand (8) der Ventilkammer (4).

5. Saugstrahlpumpe nach Anspruch 1, **dadurch gekennzeichnet, dass** der Ventilkörper (10) einen als Schulter (14) ausgebildeten Schließabschnitt (11) aufweist, der mit dem Ventilsitz (5) zusammenwirkt.

6. Saugstrahlpumpe nach Anspruch 1, **dadurch gekennzeichnet, dass** der Ventilkörper (10) mittels einer Ventilfeder (15) in Richtung des Ventilsitzes (5) gedrückt ist.

7. Saugstrahlpumpe nach Anspruch 6, **dadurch gekennzeichnet, dass** die Ventilfeder (15) in der Ventilkammer (4) angeordnet ist.

8. Saugstrahlpumpe nach Anspruch 1, **dadurch gekennzeichnet, dass** der Führungsabschnitt (12) des Ventilkörpers (10) durch zumindest zwei Führungsstege (32) gebildet ist.

9. Saugstrahlpumpe nach Anspruch 8, **dadurch gekennzeichnet, dass** die Führungsstege (32) jeweils zylinderförmig, quaderförmig, teilringförmig oder ähnlich ausgebildet sind.

## Claims

1. Suction jet pump having a drive line (40) which opens by way of a nozzle-shaped constriction (41) at least indirectly into a mixing channel (42), and having a pressure control valve which is provided on the drive line (40) and has an inlet channel (2) and an outlet channel (3) which both open into a valve chamber (4), in which a valve body (10) is arranged which can be moved axially with regard to a valve axis and interacts with a valve seat (5) which is provided at an end of the inlet channel (2), which end faces the valve chamber (4), having an inlet opening (26) into the valve chamber (4), which inlet opening (26) is formed between the valve body (10) and the valve seat (5) when the pressure control valve is open, the outlet channel (3) being provided on the circumference of the valve chamber (4) and being arranged in the axial direction in such a way that, when the pressure control valve is open, the result is a substantially radial outflow from the inlet opening (26) into the valve chamber (4) as far as into the outlet channel (3), the valve body (10) having a guide section (12) which protrudes into the inlet channel (2) for axial guidance of the valve body (10).

2. Suction jet pump according to Claim 1, **characterized in that** the outlet channel (3) is arranged in the axial direction in such a way that it overlaps with the inlet opening (26) when the pressure control valve is open.

3. Suction jet pump according to Claim 1, **characterized in that** the valve seat (5) is configured as a flat seat or linear sealing seat.

4. Suction jet pump according to Claim 1, **characterized in that** the valve seat (5) is elevated annularly with respect to a first end wall (8) of the valve chamber (4).

5. Suction jet pump according to Claim 1, **characterized in that** the valve body (10) has a closing section (11) which is configured as a shoulder (14) and interacts with the valve seat (5).

6. Suction jet pump according to Claim 1, **characterized in that** the valve body (10) is pressed in the direction of the valve seat (5) by means of a valve spring (15).

7. Suction jet pump according to Claim 6, **characterized in that** the valve spring (15) is arranged in the valve chamber (4).

8. Suction jet pump according to Claim 1, **characterized in that** the guide section (12) of the valve body (10) is formed by at least two guide webs (32).

9. Suction jet pump according to Claim 8, **characterized in that** the guide webs (32) are in each case of cylindrical, parallelepiped-shaped, part-annular or similar configuration.

## Revendications

1. Pompe à jet aspirant comprenant une conduite d'alimentation (40) qui débouche avec un rétrécissement en forme de buse (41) au moins indirectement dans un canal de mélange (42), et comprenant une soupape de régulation de pression prévue au niveau de la conduite d'alimentation (40), laquelle soupape présente un canal d'entrée (2) et un canal de sortie (3), tous deux débouchant dans une chambre de soupape (4) dans laquelle est disposé un corps de soupape (10) déplaçable axialement par rapport à un axe de soupape, lequel corps de soupape coopère avec un siège de soupape (5) prévu sur une extrémité du canal d'entrée (2) tournée vers la chambre de soupape (4), avec une ouverture d'entrée (26) dans la chambre de soupape (4) formée lorsque la soupape de régulation de la pression est ouverte entre le corps de soupape (10) et le siège de soupape (5), le canal de sortie (3) étant prévu sur la périphérie de la chambre de soupape (4) et étant disposé dans la direction axiale de telle sorte que lorsque la soupape de régulation de la pression est ouverte, il se produise un écoulement sensiblement radial depuis l'ouverture d'entrée (26) dans la chambre de soupape (4) jusque dans le canal de sortie (3), le corps de soupape (10) présentant une portion de guidage (12) pénétrant dans le canal d'entrée (2) pour le guidage axial du corps de soupape (10).

2. Pompe à jet aspirant selon la revendication 1, **caractérisée en ce que** le canal de sortie (3) est disposé dans la direction axiale de telle sorte qu'il chevauche l'ouverture d'entrée (26) lorsque la soupape de régulation est ouverte.

3. Pompe à jet aspirant selon la revendication 1, **caractérisée en ce que** le siège de soupape (5) est réalisé sous forme de siège plat ou de siège d'étanchéité de forme linéaire.

4. Pompe à jet aspirant selon la revendication 1, **caractérisée en ce que** le siège de soupape (5) est rehaussé sous forme annulaire par rapport à une première paroi frontale (8) de la chambre de soupape (4).

5. Pompe à jet aspirant selon la revendication 1, **caractérisée en ce que** le corps de soupape (10) présente une portion de fermeture (11) réalisée sous forme d'épaulement (14), qui coopère avec le siège de soupape (5).

6. Pompe à jet aspirant selon la revendication 1, **caractérisée en ce que** le corps de soupape (10) est pressé au moyen d'un ressort de soupape (15) dans la direction du siège de soupape (5).

7. Pompe à jet aspirant selon la revendication 6, **caractérisée en ce que** le ressort de soupape (15) est disposé dans la chambre de soupape (4).

8. Pompe à jet aspirant selon la revendication 1, **caractérisée en ce que** la portion de guidage (12) du corps de soupape (10) est formée par au moins deux nervures de guidage (32).

9. Pompe à jet aspirant selon la revendication 8, **caractérisée en ce que** les nervures de guidage (32) sont réalisées à chaque fois sous forme cylindrique, quadratique, partiellement annulaire ou sous une forme similaire.
